(19) Europäisches Patentamt
European Patent Office
Office européen des brevets

(11) **EP 1 773 920 B1**

(12) **EUROPÄISCHE PATENTSCHRIFT**

(45) Veröffentlichungstag und Bekanntmachung des Hinweises auf die Patenterteilung:
**09.04.2008 Patentblatt 2008/15**

(51) Int Cl.:
*C08J 3/03* (2006.01)        *C08G 77/26* (2006.01)
*C08G 77/388* (2006.01)

(21) Anmeldenummer: **05771581.5**

(22) Anmeldetag: **28.07.2005**

(86) Internationale Anmeldenummer:
**PCT/EP2005/008246**

(87) Internationale Veröffentlichungsnummer:
**WO 2006/015740 (16.02.2006 Gazette 2006/07)**

(54) **VERFAHREN ZUR HERSTELLUNG VON EMULSIONEN VON HOCHVISKOSEN ORGANOPOLYSILOXANEN**

METHOD FOR THE PRODUCTION OF EMULSIONS OF HIGHLY-VISCOUS ORGANOPOLYSILOXANES

PROCEDE DE PRODUCTION D'EMULSIONS D'ORGANOPOLYSILOXANES A VISCOSITE ELEVEE

(84) Benannte Vertragsstaaten:
**BE DE FR GB NL**

(30) Priorität: **05.08.2004 DE 102004038148**

(43) Veröffentlichungstag der Anmeldung:
**18.04.2007 Patentblatt 2007/16**

(73) Patentinhaber: **Wacker Chemie AG**
**81737 München (DE)**

(72) Erfinder:
• **HERZIG, Christian**
**83329 Waging (DE)**
• **DORMEIER, Siegfried**
**94166 Stubenberg (DE)**

(74) Vertreter: **Deffner-Lehner, Maria et al**
**Wacker Chemie AG**
**Zentralbereich Patente, Marken und Lizenzen**
**Hanns-Seidel-Platz 4**
**81737 München (DE)**

(56) Entgegenhaltungen:
| EP-A- 0 366 133 | EP-A- 0 563 962 |
| EP-A- 0 908 498 | EP-A- 1 541 615 |
| DE-A1- 1 905 101 | DE-A1- 2 500 020 |

**Beschreibung**

Die Erfindung betrifft ein Verfahren zur Herstellung von Emulsionen von hochviskosen Organopolysiloxanen. Weiterhin betrifft die Erfindung Emulsionen von hochviskosen Organopolysiloxanen.

Zur Herstellung von Polysiloxanen mit hoher Viskosität existiert eine Reihe von Methoden, die hauptsächlich auf Kondensationsreaktionen beruhen. So werden silanolfunktionelle hochviskose Polysiloxane standardmäßig aus niedrigviskosen Hydrolysaten der Chlorsilane - meist Dimethyldichlorsilan - hergestellt, in dem diese unter Bildung von Wasser bei höherer Temperatur meist unter Mitwirkung saurer Katalysatoren kondensiert werden. Derartige Kondensationen verlaufen in wässriger Emulsion nur langsam und unvollständig, so dass eine Viskositätserhöhung der eingesetzten Siloxanrohstoffe nur in bescheidenem Ausmaß erfolgt. Zur Herstellung von Emulsionen hochviskoser Aminöle ist diese Methode überhaupt nicht anwendbar.

In ähnlicher Weise lassen sich silanolfunktionelle Polysiloxane mit Methoxysilanen unter Bildung von Methanol kondensieren. Hierzu sind meist höhere Temperaturen sowie Katalysatoren erforderlich, um technisch akzeptable Umsetzungsraten zu erreichen. So ist das Standardverfahren zur Herstellung von marktüblichen aminofunktionellen Siloxanen die basenkatalysierte Kondensation von Aminoalkyl-methoxysilanen mit einem kurzkettigen Hydrolysat von Dimethyldichlorsilan bei erhöhter Temperatur.

In Anbetracht der Umsetzungstemperaturen von 100°C und höher, sowie der Reaktionsdauer über mehrere Stunden ist dieses Verfahren zur Herstellung von Emulsionen hochviskoser Polysiloxane ungeeignet, besonders wenn es sich bei der kontinuierlichen Phase der Emulsion um Wasser handelt. In diesem Fall ist es zwar prinzipiell möglich, höherviskose Organopolysiloxane erst herzustellen und danach zu emulgieren. Das Emulgierverfahren selbst ist je nach mechanischer Ausführung auf Öle mit nicht zu hoher Viskosität beschränkt, so dass Organopolysiloxane mit mehr als 50.000 mPa.s bei 25°C kaum noch mit akzeptablem Aufwand emulgiert werden können, und eine wirtschaftliche Verfahrensweise eher Produkte mit weniger als 30.000 mPa.s bei 25°C erfordert.

In DE-A 2500020 ist ein Verfahren zur Herstellung von Aminosiloxanen beschrieben, bei dem silanolterminierte Polysiloxane mit α-Aminosilanen umgesetzt werden, die eine Alkoxygruppe tragen. Die Reaktion läuft bei moderaten Temperaturen unter Abspaltung von Alkohol ab. Allerdings können mit dieser Technik nur vergleichsweise instabile α-Aminosiloxane und auch nur in difunktioneller telecheler Form hergestellt werden.

Hochviskose Polysiloxane sind auch durch Polyadditionsreaktionen zu erhalten, wie sie in US 5,241,034 und US 6,252,100 beschrieben sind. EP-A 874 017 und US 6,451,909 offenbaren Polyadditionsreaktionen in Emulsion zur Herstellung von hochviskosen Polysiloxanen. Allen diesen Polyadditionsmethoden ist jedoch gemein, dass zum Ablauf der Reaktionen Metallkatalysatoren benötigt werden, die oftmals nicht erwünscht sind. In Gegenwart von N-haltigen Sil(ox)anen treten außerdem noch Inhibierungseffekte auf, so dass eine gut katalysierte Polyaddition nur noch schlecht oder gar nicht mehr durchgeführt werden kann.

Es bestand daher die Aufgabe, ein Verfahren zur Herstellung von Emulsionen hochviskoser Organopolysiloxane, die Si-C gebundene Reste mit basischen Stickstoff enthalten, bereitzustellen, bei dem die vorstehend genannten Nachteile vermieden werden und die unter moderaten thermischen Bedingungen hergestellt werden können. Weiterhin bestand die Aufgabe, Emulsionen von hochviskosen Organopolysiloxanen bereitzustellen, die Si-C gebundene Reste mit basischen Stickstoff enthalten und die stabil sind.

Die Aufgabe wird durch die Erfindung gelöst.

Gegenstand der Erfindung ist ein Verfahren zur Herstellung von Emulsionen von hochviskosen Organopolysiloxanen, dadurch gekennzeichnet, dass Siloxane ausgewählt aus der Gruppe von Siloxanen (1) aus Einheiten der allgemeinen Formel

$$A_a R_c (OR^1)_d SiO_{\frac{4-(a+c+d)}{2}} \qquad (I)$$

wobei

A      einen einwertigen, Si-C gebundenen Rest mit basischem Stickstoff bedeutet,

R      einen einwertigen, gegebenenfalls substituierten Kohlenwasserstoffrest mit 1 bis 18 Kohlenstoffatomen je Rest bedeutet,

$R^1$      ein Wasserstoffatom oder einen Alkylrest mit 1 bis 8 Kohlenstoffatomen, bevorzugt ein Wasserstoffatom oder einen Methyl- oder Ethylrest bedeutet,

a      0 oder 1,

c      0, 1, 2 oder 3 und

d      0 oder 1 ist,

mit der Maßgabe, dass die Summe a+c+d ≤ 3 ist und durchschnittlich mindestens ein Rest A und mindestens ein Rest $R^1$ in der Bedeutung von $R^1$ gleich Wasserstoffatom je Molekül enthalten ist,
Siloxanen (2) aus Einheiten der allgemeinen Formel

$$R_c(OR^1)_dSiO_{\frac{4-(c+d)}{2}} \qquad (II)$$

wobei R, $R^1$, c und d die oben dafür angegebene Bedeutung haben, mit der Maßgabe, dass die Summe c+d ≤ 3 ist und mindestens ein Rest $R^1$ in der Bedeutung von $R^1$ gleich Wasserstoffatom je Molekül enthalten ist,
und den Mischungen aus Siloxanen (1) und (2),
mit Silanen (3) der allgemeinen Formel

$$BR_eSi(OR^3)_{3-e} \qquad (III)$$

B      einen einwertigen Rest der Formel $-CR^2_2-Y$ bedeutet,
$R^2$      ein Wasserstoffatom oder einen Alkylrest mit 1 bis 4 Kohlenstoffatomen, bevorzugt ein Wasserstoffatom bedeutet,
Y      ein monofunktioneller Rest aus der Gruppe der Halogene, der monosubstituierten Atome O und S und der substituierten Atome N und P bedeutet
$R^3$      einen Alkylrest mit 1 bis 8 Kohlenstoffatomen je Rest und
e      0, 1 oder 2, bevorzugt 0 oder 1 ist,

in Gegenwart von Dispersionsmedium (4), vorzugsweise Wasser, und gegebenenfalls Emulgatoren (5) umgesetzt werden,
mit der Maßgabe, dass, wenn kein Siloxan (1) mitverwendet wird, Y in Silan (3) ein monofunktioneller Rest aus der Gruppe der substituierten N-Atome ist.
Gegenstand der Erfindung sind weiterhin Emulsionen von hochviskosen Organopolysiloxanen enthaltend hochviskose Organopolysiloxane aus Einheiten der allgemeinen Formel

$$A_aB_bR_c(OR^1)_dSiO_{\frac{4-(a+b+c+d)}{2}} \qquad (IV)$$

wobei A, B, R, $R^1$, a, c und d die oben dafür angegebene Bedeutung haben,
b 0 oder 1 ist,
mit der Maßgabe, dass die Summe a+b+c+d ≤ 3 ist und a und b in derselben Siloxaneinheit nicht gleichzeitig 1 sind und dass durchschnittlich je Molekül mindestens ein Rest B enthalten ist und dass die hochviskosen Organopolysiloxane eine Viskosität von 110.000 bis 50.000.000 mPa·s bei 25°C aufweisen, Dispersionsmedium (4), vorzugsweise Wasser, und
gegebenenfalls Emulgatoren (5).
Die erfindungsgemäßen hochviskosen Organopolysiloxane können eine lineare, verzweigte oder dendrimerartige hochverzweigte Struktur aufweisen.
Vorzugsweise sind die erfindungsgemäßen Emulsionen wässrige Emulsionen von hochviskosen Organopolysiloxanen.
Vorzugsweise werden die erfindungsgemäßen Emulsionen in Gegenwart von Emulgatoren (5) hergestellt.
Die nach dem erfindungsgemäßen Verfahren erhaltenen hochviskosen Organopolysiloxane sind stabiler als die nach dem in DE 25 00 020 A beschriebenen Verfahren erhaltenen Organopolysiloxane, die instabil sind, da die Aminogruppen thermisch oder/und im sauren pH-Bereich leicht abgespalten werden, was in einem Sinken der Aminzahl (Die Aminzahl entspricht der Anzahl von ml 1N HCl, die zur Neutralisation von 1 g Substanz erforderlich ist.) zu beobachten ist. Weiterhin werden durch das erfindungsgemäße Verfahren hochviskose Organopolysiloxane hergestellt, d.h. es erfolgt durch die Umsetzung eine Viskositätserhöhung, was nach dem in DE 25 00 020 A beschriebenen Verfahren nicht möglich ist.
Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie cyclopentyl-, Cyclohexyl-, Cycloheptyl- und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Alkinylreste, wie der Ethinyl-, Propargyl- und 1-Propinylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2', 2'-Hexafluorisopropylrest, der Heptafluorisopropylrest und Halogenarylreste, wie der o-, m- und p-Chlorphenylrest.

Beispiele für Alkylreste $R^1$ sind der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest.

Beispiele für Alkylreste $R^2$ sind der Methyl-, Ethyl-, n-Propyl-, iso-Propyl-, 1-n-Butyl-, 2-n-Butyl-, iso-Butyl- und tert.-Butylrest.

Beispiele für Alkylreste $R^1$ gelten im vollen Umfang für Alkylreste $R^3$.

Bevorzugt ist der Rest A ein Rest der Formel

$$R^5{}_2N\text{-}(CHR^2)_n\text{-} \qquad (V)$$

wobei $R^2$ die oben dafür angegebene Bedeutung hat und vorzugsweise ein Wasserstoffatom ist,
$R^5$ -gleich oder verschieden ist und ein Wasserstoffatom oder einen Alkyl-, Cycloalkyl- oder Aminoalkylrest bedeutet und n eine ganze Zahl von 2 bis 10, vorzugsweise 2 bis 4, bevorzugt 3 ist.

Beispiele für Reste $R^5$ sind die für den Rest R angegebenen Beispiele für Alkylreste und Cycloalkylreste, sowie Aminoalkylreste, wobei von den Aminoalkylresten der Aminoethylrest bevorzugt ist.

Beispiele für Reste A sind 3-Aminopropyl, 3-Methylaminopropyl, 3-Dimethylaminopropyl, 3-Diethylaminopropyl, 3-Cyclohexylaminopropyl, 3-(2-Aminoethyl)aminopropyl, 3-(3-Aminopropyl)aminopropyl, 3-(3-Dimethylaminopropyl) aminopropyl, 3,3-bis(dimethylaminopropyl)aminopropyl sowie durch Umsetzung mit Carbonsäuren, wie Essigsäure teilacylierte und durch Umsetzung mit Lactonen, wie Butyrolacton oder Valerolacton teilamidierte Formen.

Beispiele für Reste Y sind
der Fluor-, Chlor-, Brom- oder Jodsubstituent,
die Gruppen -OH oder -$OR^4$
die Gruppen -SH oder -$SR^4$,
die Gruppen -$NH_2$, -$NHR^4$ oder-$NR^4{}_2$ und
die Gruppen -$PR^4{}_2$, -$P(OR^4)_2$, und -$PO(OR^4)_2$,
mit $R^4$ gleich einem einwertigen organischen, gegebenenfalls N- und/oder O-Atome enthaltenden Rest, vorzugsweise einen einwertigen, gegebenenfalls N- und/oder O-Atome enthaltenden Kohlenwasserstoffrest mit 1 bis 18 Kohlenstoffatomen.

Beispiele für Reste B sind Hydroxymethyl, Methoxymethyl, Ethoxymethyl, 2-Ethoxyethoxymethyl, 2-Butoxyethoxymethyl, Acetoxymethyl, Mercaptomethyl, Ethylthiomethyl, Dodecylthiomethyl, Aminomethyl, Methylaminomethyl, Dimethylaminomethyl, Diethylaminomethyl, Dibutylaminomethyl, Cyclohexylaminomethyl, Anilinomethyl, 3-Dimethylaminopropylaminomethyl, Bis(3-dimethylaminopropyl)aminomethyl, Diethylphosphinomethyl, Dibutylphosphinomethyl, sowie Gruppen der Formeln
-$CH_2NHCOR^4$, -$CH_2NHCO_2R^4$ oder -$CH_2NHCONHR^4$,
wobei $R^4$ die oben dafür angegebene Bedeutung hat.

Vorzugsweise ist B ein Rest der Formel -$CH_2NHR^4$ oder -$CH_2NR^4{}_2$, wobei $R^4$ die oben dafür angegebene Bedeutung hat.

Beispiele für Kohlenwasserstoffreste R gelten im vollen Umfang für Kohlenwasserstoffreste $R^4$.

Bevorzugt werden als Siloxane (1) solche der allgemeinen Formel

$$(R^1O)R_2SiO(SiR_2O)_n(SiRAO)_mSiR_2(OR^1) \qquad (VI)$$

wobei A, R und $R^1$ die oben dafür angegebene Bedeutung haben,
m eine ganze Zahl von 1 bis 30 ist und
n 0 oder eine ganze Zahl von 1 bis 1000 ist,
mit der Maßgabe, das 25 bis 100 Mol-%, vorzugsweise 50 bis 100 Mol-% aller Reste $R^1$ Wasserstoffatome sind, eingesetzt.

Als Siloxane (2) werden bevorzugt solche der allgemeinen Formel

$$(R^1O)R_2SiO(SiR_2O)_pSiR_2(OR^1) \qquad (VII)$$

wobei R und $R^1$ die oben dafür angegebene Bedeutung haben und

p eine ganze Zahl von 1 bis 1000 ist,

eingesetzt.

Besonders bevorzugt werden Siloxane (1) eingesetzt.

Beispiele für Siloxane (1) sind handelsübliche Aminöle mit z.B. 3-(2-Aminoethyl)aminopropylfunktionen, die Silanolgruppen enthalten.

Beispiele für gegebenenfalls mitverwendete Siloxane (2) sind handelsübliche Polydimethylsiloxane mit endständigen Silanolgruppen.

Diese Verbindungen sind sehr kostengünstig zugänglich, wodurch das erfindungsgemäße Verfahren wirtschaftlich besonders attraktiv ist.

Beispiele für Silane (3) sind

2-Butoxyethoxymethyltrimethoxysilan,

Methoxymethyl-methyldiethoxysilan,

Diethylaminomethylmethyldimethoxysilan,

Dibutylaminomethyltriethoxysilan,

Dibutylaminomethyltributoxysilan,

Cyclohexylaminomethyltrimethoxysilan,

Cyclohexylaminomethyltriethoxysilan,

Cyclohexylaminomethyl-methyldiethoxysilan,

Anilinomethyltriethoxysilan,

3-Dimethylaminopropyl-aminomethyltrimethoxysilan,

Acetylaminomethylmethyldimethoxysilan,

Ethylcarbamoylmethyltrimethoxysilan,

Ethylcarbamoylmethyl-methyldimethoxysilan,

Diisopropylaminocarbamoylmethyl-methyldimethoxysilan und

Imidazolylcarbamoylmethyl-methyldimethoxysilan.

Bei dem erfindungsgemäßen Verfahren werden Silane (3) vorzugsweise in Mengen von 0,01 bis 10 Gew.-% bevorzugt 0,1 bis 2,0 Gew.-%, jeweils bezogen auf Siloxan (1) und Siloxan (2) eingesetzt.

Die Herstellung der erfindungsgemäßen Emulsionen hochviskoser Organopolysiloxane erfolgt durch intensives Mischen von Siloxanen aus der Gruppe der Siloxane (1) und Siloxane (2), Silanen (3)

Dispersionsmedium (4), vorzugsweise Wasser, und gegebenenfalls Emulgatoren (5)

miteinander.

Vorzugsweise werden Emulgatoren (5) mitverwendet.

Technologien zur Herstellung von Emulsionen von Organopolysiloxanen sind bekannt. So kann das intensive Mischen in Rotor-Stator-Rührvorrichtungen, Kolloidmühlen oder in Hochdruckhomogenisatoren erfolgen.

Obwohl die Silane (3) bekanntermaßen hydrolyseempfindliche Gruppen enthalten, besonders wenn $R^3$ ein Methyl- oder Ethylrest ist, werden selbst in Gegenwart von Wasser überraschenderweise hochviskose Organopolysiloxane durch Kondensation mehrerer Siloxane (1) oder/und Siloxane (2) erhalten.

Die Art der Mischung der Komponenten, die zur Herstellung der erfindungsgemäßen Emulsionen gebraucht werden, ist nicht sehr kritisch und kann in verschiedener Reihenfolge ausgeübt werden. In Abhängigkeit von den Komponenten (1), (2), (3), (4) und (5) können sich aber bevorzugte Vorgehensweisen ergeben, die im Einzelfall geprüft werden sollten.

Es können z.B. die Komponenten (1) und/oder (2) und (3) miteinander vorgemischt werden, daraufhin der (oder die) Emulgator(en) (5) zugefügt und danach das Dispersionsmedium (4) eingearbeitet werden. Es ist auch möglich, die Komponenten (1) bis (5) der Reihe nach in die Emulgierapparatur zu dosieren. In besonderen Fällen kann es z.B. aufgrund der Siloxanviskosität oder -reaktivität vorteilhaft sein, Silan (3) mit Siloxan (1) zu mischen und danach Siloxan (2) einzuarbeiten, oder umgekehrt, je nachdem, wie sich günstigere rheologische Eigenschaften für Verarbeitung der Komponenten ergeben.

Bei sehr reaktiven Silanen (3) kann es vorteilhaft sein, erst die Komponente (1) und/oder (2) mit Emulgator (5) und dem Dispersionsmedium (4) in eine steife Phase überzuführen, und danach das Silan (3) einzudosieren, bevor eine Phasenumkehr und damit z.B. eine Öl-in-Wasser-Emulsion erhalten wird.

Bei dem erfindungsgemäßen Verfahren wird Dispersionsmedium (4), bevorzugt Wasser, in Mengen von vorzugsweise 40 bis 900 Gew.-%, besonders bevorzugt 100 bis 600 Gew.-%, jeweils bezogen auf das Gesamtgewicht an Siloxanen (1) und/oder (2) und Silane (3), eingesetzt.

Bei dem erfindungsgemäßen Verfahren können als Emulgatoren (5) alle bisher bekannten, ionischen und nichtionischen Emulgatoren sowohl einzeln als auch als Mischungen verschiedener Emulgatoren eingesetzt werden, mit denen auch bisher wässrige Emulsionen von Organopolysiloxanen hergestellt werden konnten.

Beispiele für anionische Emulgatoren sind:

1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 40 Ethylenoxid (EO)- bzw. Propylenoxid(PO)einheiten.

2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; gegebenenfalls können diese Alkohole oder Alkylphenole auch mit 1 bis 40 EO-Einheiten ethoxyliert sein.

3. Alkali- und Ammoniumsalze von Carbonsäuren mit 8 bis 20 C-Atomen im Alkyl-, Aryl-, Alkaryl- oder Aralkylrest.

4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.
Beispiele für nichtionische Emulgatoren sind:

5. Polyvinylalkohol, der noch 5 bis 50 %, vorzugsweise 8 bis 20 % Vinylacetateinheiten aufweist, mit einem Polymerisationsgrad von 500 bis 3000.

6. Alkylpolyglycolether, vorzugsweise solche mit 8 bis 40 EO-Einheiten und Alkylresten von 8 bis 20 C-Atomen.

7. Alkylarylpolyglycolether, vorzugsweise solche mit 8 bis 40 EO-Einheiten und 8 bis 20 C-Atomen in den Alkyl- und Arylresten.

8. Ethylenoxid/Propylenoxid(EO/PO)-Blockcopolymere, vorzugsweise solche mit 8 bis 40 EO- bzw. PO-Einheiten.

9. Additionsprodukte von Alkylaminen mit Alkylresten von 8 bis 22 C-Atomen mit Ethylenoxid oder Propylenoxid.

10. Fettsäuren mit 6 bis 24 C-Atomen.

11. Alkylpolyglykoside der allgemeinen Formel $R^*\text{-O-}Z_O$, worin $R^*$ einen linearen oder verzweigten, gesättigten oder ungesättigten Alkylrest mit im Mittel 8 - 24 C-Atomen und $Z_O$ einen Oligoglykosidrest mit im Mittel o = 1 - 10 Hexose- oder Pentoseeinheiten oder Gemischen davon bedeuten.

12. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen.

13. Polare Gruppen enthaltende lineare Organo(poly)siloxane, insbesondere solche mit Alkoxygruppen mit bis zu 24 C-Atomen und/oder bis zu 40 EO- und/oder PO-Gruppen.
Beispiele für kationische Emulgatoren sind:

14. Salze von primären, sekundären und tertiären Fettaminen mit 8 bis 24 C-Atomen mit Essigsäure, Schwefelsäure, Salzsäure und Phosphorsäuren.

15. Quarternäre Alkyl- und Alkylbenzolammoniumsalze, insbesondere solche, deren Alkylgruppen 6 bis 24 C-Atome besitzen, insbesondere die Halogenide, Sulfate, Phosphate und Acetate.

16. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.
Als Ampholytische Emulgatoren eignen sich besonders:

17. Langkettig substituierte Aminosäuren, wie N-Alkyl-di-(aminoethyl-)glycin oder N-Alkyl-2-aminopropionsäuresalze.

18. Betaine, wie N-(3-Acylamidopropyl)-N,N-dimethylammoniumsalze mit einem $C_8$-$C_{18}$-Acylrest und Alkyl-imidazolium-Betaine.

Bevorzugt als Emulgatoren sind nichtionische Emulgatoren, insbesondere die vorstehend unter 6. aufgeführten Alkylpolyglycolether.
Bei dem erfindungsgemäßen Verfahren werden die Emulgatoren (5) in Mengen von vorzugsweise 0,5 bis 50 Gew.-%, besonders bevorzugt 2 bis 25 Gew.-%, jeweils bezogen auf das Gesamtgewicht an Siloxanen (1) und/oder (2) und Silane (3), eingesetzt.

Das erfindungsgemäße Verfahren wird vorzugsweise bei Temperaturen unter 100°C, bevorzugt bei 10°C bis 70°C, besonders bevorzugt bei 15°C bis 40°C durchgeführt. Weiterhin wird das erfindungsgemäße Verfahren vorzugsweise beim Druck der umgebenden Atmosphäre durchgeführt, kann aber auch bei höheren oder niederen Drücken durchgeführt werden.

Die hochviskosen Organopolysiloxane weisen vorzugsweise Viskositäten von 110.000 mPa.s bis 5.000.000 mPa.s bei 25°C und bevorzugt 110.000 mPa.s bis 10.000.000 mPa.s bei 25°C auf.

Die Emulsionen können als Emulsionen unverdünnter hochviskoser Organopolysiloxane hergestellt werden, jedoch empfiehlt sich manchmal aus Handhabungsgründen eine Verdünnung mit organischen Lösungsmitteln oder niedrig viskosen Oligomeren/Polymeren, bevorzugt mit Siloxanen, wie Dimethylpolysiloxanen. Bezogen auf das Gesamtgewicht an Siloxanen (1) und/oder (2) und Silanen (3) betragen diese Verdünnungszusätze vorzugsweise 10 bis 1000 Gew.-%, besonders bevorzugt 20 bis 100 Gew.-%

Sollten umgekehrt aus verwendungstechnischer Sicht besonders schwer fließende Konsistenzen gewünscht sein, können die hochviskosen Organopolysiloxane auch in Gegenwart von Harzen und/oder harzartigen Zusätzen hergestellt werden. Geeignet sind organische Harze wie Kohlenwasserstoffharze, Polyacrylatharze oder Polyurethanharze, sowie Polysiloxanharze wie MQ-Harze, MTQ-Harze, MDT-Harze und MDQ-Harze sowie kubische Siloxanverbindungen, die unter dem Begriff POSS (polyhedral oligomeric silsesquioxane) bekannt sind.

Beispiele für MQ-Harze sind solche aus Einheiten der Formel

$$R_3SiO_{1/2} \qquad \text{und} \qquad SiO_2$$

wobei R die oben dafür angegebene Bedeutung hat, vorzugsweise ein Methylrest ist, und die Einheiten der Formel $R_3SiO_{1/2}$ gleich oder verschieden sein können. Das Verhältnis von Einheiten der Formel $R_3SiO_{1/2}$ zu Einheiten der Formel $SiO_2$ beträgt vorzugsweise 0,6 bis 2,0.

Die oben genannten Harzzusätze werden bevorzugt in Mengen von 0,1 bis 100 Gew.-%, besonders bevorzugt mit 10 bis 80 Gew.-% bezogen auf das Gesamtgewicht an Siloxanen (1) und/oder (2) und Silanen (3) eingesetzt.

Beispiele für organische Lösungsmittel sind Toluol, n-Hexan, n-Heptan und techn. Benzinfraktionen.

Die hochviskosen Organopolysiloxane können je nach Einsatz von Di- oder Trialkoxysilan (3) und linearem oder verzweigtem Siloxan (1) und/oder (2) ebenfalls lineare, verzweigte oder sogar hochverzweigte Strukturen haben.

Dialkoxysilane (3) erzeugen aus den bevorzugten Siloxanen der Formeln (VI) oder (VII) üblicherweise lineare hochviskose Organopolysiloxane, deren Endviskosität sowohl von den Kettenlängen der Siloxane (1) oder/und (2) abhängen, als auch von der Stöchiometrie der miteinander reagierenden SiOH- und $SiOR^3$-Gruppen. Die höchsten Vis- kositäten werden erreicht, wenn gleich viele der reaktiven Gruppen miteinander reagieren. Verluste durch Flüchtigkeit oder Nebenreaktionen können hierzu ein stöchiometrisches Verhältnis - abweichend 1,0 : 1,0 - erfordern.

Werden Siloxane der Formeln (VI) oder (VII) eingesetzt, die weniger als 100% ihrer Gruppen $R^1$ in der Bedeutung von Wasserstoff vorliegen haben, werden niedrigere Kettenlängen erhalten, da vorhandene Alkoxygruppen eine Kettenendstopperung bewirken.

Der Einsatz von Trialkoxysilanen (3) führt zu verzweigten Siloxanpolymeren, deren Verzweigungsgrad unter anderem davon abhängt, wie viele Silane (3) pro erzeugtem hochviskosem Organopolysiloxanmolekül einkondensiert wurden. Bei einem Quotienten $SiOR^3/SiOH < 0,2$ ist der Verzweigungsgrad der erhaltenen Polymere gering. Er steigt aber mit ebenfalls steigendem Quotienten. Der zum Erhalt von flüssigen Polymerprodukten einer bestimmten Zielvis- kosität erforderliche Quotient $SiOR^3/SiOH$ kann einfach experimentell bestimmt werden.

Monofunktionelles Monoalkoxysilan reagiert als Kettenendstopper und kann dann eingesetzt werden, wenn gewünscht ist, dass Gruppen "B" am Ende von Siloxan-ketten sitzen sollen.

Im Fall, dass stabile Endprodukte bezüglich ihrer Viskosität gewünscht sind, sollte ein $SiOR^3/SiOH$-Quotient von maximal 1,0 gewählt werden. Polysiloxankondensate, die überschüssige $SiOR^3$-Gruppen enthalten, haben das Risiko von hydrolytischen Folgereaktionen mit nachfolgender Kondensation und damit der Veränderung des durchschnittlichen Molekulargewichtes.

Das erfindungsgemäße Verfahren hat den Vorteil, dass es ohne Zusatz von Katalysatoren, insbesondere ohne Zusatz von Metallkatalysatoren abläuft. Die Umsetzung von (1) und/oder (2) mit (3) läuft vorzugsweise in wenigen Minuten bis mehreren Stunden vollständig ab, wobei auch hier Methoxysilane schneller als Ethoxysilane reagieren. Die Kondensation kann allerdings durch Säuren und Basen beschleunigt werden, was aber nicht bevorzugt ist.

Die bei dem erfindungsgemäßen Verfahren als Kondensationsnebenprodukte anfallenden Alkohole können im Produkt verbleiben oder auch entfernt werden, beispielsweise durch Destillation unter Vakuum oder durch Extraktion.

Beispiel 1

In einem Turrax-Emulgiergerät (Fa. Janke & Kunkel) wird aus 9,38 g Isotridecyldecaethoxylat käuflich erwerblich unter dem Handelsnamen Lutensol TO 10 (Fa. BASF), 3,90 g Ricinusölethoxylat G 1300 (Fa. Atlas) und 4,55 g Wasser ein steifes Emulgatorgemisch hergestellt, zu dem 125,28 g eines frisch hergestellten homogenen Polymer/Silangemisches aus 124,63 g PDMS A (Polydimethylsiloxandiol mit einem Gehalt an terminalen OH-Gruppen von 765 Gew.-ppm) und 0,86 g N-Morpholylmethyl-methyldiethoxysilan dosiert wird. Es wird dann mit insgesamt 106,65 g Wasser portionsweise verdünnt, worauf man eine stabile Emulsion mit einer durchschnittlichen Teilchengröße von 275 nm erhält. Der Silicongehalt der Emulsion beträgt 50 %.

Durch Eindampfen der Emulsion nach einer Standzeit von 24h/25°C und Reextraktion des Siloxanpolymers mit n-Heptan wird nach Verdunsten des Lösemittels ein hochviskoses Polysiloxan mit einer Viskosität von 3400 Pa.s (25°C) erhalten. Die Viskosität des eingesetzten PDMS A wurde mit dem beschriebenen Verfahren in dispergierter Phase auf den 170-fachen Wert erhöht.

Beispiel 2

Nacheinander werden in einem Dissolver 15,33 g eines aufgeschmolzenen, nicht-ionischen Emulgators auf Polyethylenglycolgrundlage, der unter dem Handelsnamen Arlypon SA 4D (Fa. Grünau) käuflich erwerblich ist, 70,95 g entionisiertes Wasser und zuletzt 9,05 g einer 10%igen Lösung eines nicht-ionischen Emulgators auf Polyethylenglycolgrundlage, der unter dem Handelsnamen Arlypon SA 20 (Fa. Grünau) käuflich erwerblich ist, in Wasser miteinander homogenisiert. Danach werden 177,37 g einer zuvor homogenisierten Mischung aus 373,89 g PDMS A (in Beispiel 1 beschrieben) und 2,15 g N-Morpholylmethyl-methyldiethoxysilan in drei Portionen zugegeben. Zugabe von 42,23 g Wasser ergibt eine cremig steife Phase, die mit noch 2-mal der gleichen Menge Wasser weiter verdünnt wird. Die feincremige Emulsion enthält 44,4 % Siloxananteil; der Festgehalt beträgt 49,4 %. Die Emulsion hat eine Viskosität von 68 Pa.s (25°C) bei 2,5 UpM. Nach 24 Stunden wird das Siloxanpolymer mit Aceton gefällt und nachgewaschen. Das getrocknete hochviskose Polysiloxan hat eine Viskosität von 3800 Pa.s (25°C) und damit den 190-fachen Wert des ursprünglich eingesetzten Polymers.

Beispiel 3

Beispiel 2 wird sinngemäß wiederholt mit dem Unterschied, dass anstatt der Mischung aus PDMS A und Morpholylsilan nun 118,23 g reines PDMS A (in Beispiel 1 beschrieben) in drei Portionen und danach 59,14 g einer Lösung von 1,73 g Cyclohexylaminomethyl-methyldiethoxysilan in 150,00g eines Siliconöls der Viskosität 350 mPa.s (25°C) in zwei Portionen zugegeben werden. Es folgt die identische Verdünnung mit Wasser.

Bei gleichem Silicon- und Festgehalt hat die Emulsion eine Viskosität von 31 Pa·s (25°C) bei 2,5 UpM. Die Emulsion zeigt nach 5 Tagen / 50°C keine Veränderung.

Die mit Aceton gefällte und gewaschene Siloxanpolymermischung hat nach Trocknung eine Viskosität von 510 Pa·s (25°C), gegenüber 5,5 Pa·s (25°C) einer frischen Mischung von PDMS A, Silicohöl und Silan der gleichen Mengen wie vorstehend.

Beispiel 4

In einem Labordissolver werden 223,73 g einer Voremulsion aus 161,91 g aufgeschmolzenem Arlypon SA 4D (Fa. Grünau), 749,33 g entionisiertem Wasser und 95,54 g einer 10%igen Lösung von Arlypon SA 20 (Fa. Grünau) in Wasser vorgelegt. In drei Portionen werden dann insgesamt 277,49 g einer frischen Mischung aus 200 g PDMS A (in Beispiel 1 beschrieben), 100 g eines Copolymers aus 3-(2-Aminoethylamino)propyl-methylsiloxy- und Dimethylsiloxyeinheiten mit einer Aminzahl von 0,145, einer Viskosität von 4700 $mm^2$/s (bei 25°C) und einem Endgruppenverhältnis von OH/OMe = 54/46, und 1,12 g Cyclohexylaminomethyl-methyldiethoxysilan zugegeben. Nach Zugabe von 99,12 g Wasser erhält man eine cremig-steife Phase, die nach Zudosierung der doppelten Menge Wasser eine Emulsion mit 34,7 % Silicongehalt und einer Viskosität von 28 Pa.s (25°C) bei 2,5 UpM ergibt. Die Emulsion ist nach 5 Tagen/50°C unverändert.

Das mit Aceton gefällte und gewaschene Siloxanpolymer hat nach Trocknung eine Viskosität von 630 Pa.s (25°C) gegenüber 12,4 Pa.s (25°C) einer frischen Mischung der gleichen Menge von PDMS A, Aminöl und Silan.

Beispiel 5

Zur Herstellung einer Mikroemulsion eines aminhaltigen linearen Hochpolymers wird zunächst ein homogenes Emulgatorgemisch aus 15,08 g Diethylenglykolmonobutylether, 33,44 g Lutensol TO 5 (Fa. BASF), 27,40 g entionisiertem Wasser, 3,02 g Marlipal ST 1618/25 (Fa. Sasol GmbH, Marl) und 0,77 g 80%iger Essigsäure bereitet.

In diese Vormischung wird eine frische Lösung von 0,43 g Cyclohexylaminomethyl-methyldiethoxysilan in 100 g des in Beispiel 4 eingesetzten Aminöls eingerührt und dann langsam mit 119,68 g entionisiertem Wasser verdünnt. Man erhält eine dünnflüssige transparente Mikroemulsion.

Nach 24 Stunden wurde die Viskosität des durch Polykondensation entstandenen Aminöls wie folgt ermittelt: Die Mikroemulsion wird zunächst eingetrocknet, danach mehrmals mit Ethanol extrahiert. Das Siloxanpolymer konnte trotzdem nicht ganz frei von Emulgatoren erhalten werden (Nachweis von -$CH_2CH_2O$-Gruppen im $^1$H-NMR).

Das getrocknete Aminöl hatte eine Viskosität von ca. 90 Pa.s (25°c) und damit einen rund 20-fachen Wert, bezogen auf das eingesetzte Öl.

Beispiel 6

Das Beispiel 5 wird sinngemäß wiederholt mit der Abänderung, dass jetzt 0,32 g des trifunktionellen Cycloaminmethyltriethoxysilans anstatt des Diethoxysilans eingesetzt werden.

Die Viskositätsschätzung des innerhalb von 24 Stunden erhaltenen verzweigten, hochpolymeren Aminöls mit geringem Emulgatorgehalt ergibt einen Wert von ca. 800 Pa.s (25°C). Das Polykondensationsverfahren führt somit etwa zu einem 170-fachen Wert. Das Polymer zeigt die für verzweigte Siloxane einer großen Segmentlänge (durchschnittlich 420 Siloxyeinheiten) typische Strukturviskosität.

**Patentansprüche**

1.   Verfahren zur Herstellung von Emulsionen hochviskoser Organopolysiloxane, **dadurch gekennzeichnet, dass** Siloxane ausgewählt aus der Gruppe von Siloxanen (1) aus Einheiten der allgemeinen Formel

$$A_a R_c (OR^1)_d SiO_{\frac{4-(a+c+d)}{2}} \qquad (I)$$

wobei

A einen einwertigen, Si-C gebundenen Rest mit basischem Stickstoff bedeutet,
R einen einwertigen, gegebenenfalls substituierten Kohlenwasserstoffrest mit 1 bis 18 Kohlenstoffatomen je Rest bedeutet,
$R^1$ ein Wasserstoffatom oder einen Alkylrest mit 1 bis 8 Kohlenstoffatomen bedeutet,
a 0 oder 1,
c 0, 1, 2 oder 3 und
d 0 oder 1 ist,

mit der Maßgabe, dass die Summe a+c+d ≤ 3 ist und durchschnittlich mindestens ein Rest A und mindestens ein Rest $R^1$ in der Bedeutung von $R^1$ gleich Wasserstoffatom je Molekül enthalten ist,
Siloxanen (2) aus Einheiten der allgemeinen Formel

$$R_c (OR^1)_d SiO_{\frac{4-(c+d)}{2}} \qquad (II)$$

wobei R, $R^1$, c und d die oben dafür angegebene Bedeutung haben, mit der Maßgabe, dass die Summe c+d ≤ 3 ist und mindestens ein Rest $R^1$ in der Bedeutung von $R^1$ gleich Wasserstoffatom je Molekül enthalten ist, und den Mischungen aus Siloxanen (1) und (2), mit Silanen (3) der allgemeinen Formel

$$BR_e Si(OR^3)_{3-e} \qquad (III)$$

B einen einwertigen Rest der Formel -$CR^2_2$-Y bedeutet,
$R^2$ ein Wasserstoffatom oder einen Alkylrest mit 1 bis 4 Kohlenstoffatomen bedeutet,
Y ein monofunktioneller Rest aus der Gruppe der Halogene, der monosubstituierten Atome O und S und der substituierten Atome N und P bedeutet
$R^3$ einen Alkylrest mit 1 bis 8 Kohlenstoffatomen je Rest und
e 0, 1 oder 2 ist,

in Gegenwart von Dispersionsmedium (4) und
gegebenenfalls Emulgatoren (5)
umgesetzt werden,
mit der Maßgabe, dass, wenn kein Siloxan (1) mitverwendet wird, Y in Silan (3) ein monofunktioneller Rest aus der Gruppe der substituierten N-Atome ist.

2. Verfahren nach Anspruch 1, **dadurch gekennzeichnet, dass** als Dispersionsmedium (4) Wasser eingesetzt wird.

3. Verfahren nach Anspruch 1 oder 2, **dadurch gekennzeichnet, dass** die hochviskosen Organopolysiloxane eine Viskosität von 110.000 bis 50.000.000 mPa·s bei 25°C aufweisen.

4. Verfahren nach Anspruch 1, 2 oder 3, **dadurch gekennzeichnet, dass** der Rest A ein Rest der Formel

$$R^5_2N\text{-}(CHR^2)_n\text{-} \qquad (V),$$

ist, wobei $R^2$ die in Anspruch 1 dafür angegebene Bedeutung hat und vorzugsweise ein Wasserstoffatom ist,
$R^5$ gleich oder verschieden ist und ein Wasserstoffatom oder einen Alkyl-, Cycloalkyl- oder Aminoalkylrest bedeutet und
n eine ganze Zahl von 2 bis 10 ist.

5. Verfahren nach einem der Ansprüche 1 bis 4, **dadurch gekennzeichnet, dass** der Rest A ein 3-(2-Aminoethyl) aminopropylrest ist.

6. Verfahren nach einem der Ansprüche 1 bis 4, **dadurch gekennzeichnet, dass** der Rest A ein 3-Aminopropylrest ist.

7. Verfahren nach einem der Ansprüche 1 bis 6, **dadurch gekennzeichnet, dass** der Rest B ein Rest der Formel $-CH_2NHR^4$ oder $-CH_2NR^4_2$ ist, wobei $R^4$ einen einwertigen, gegebenenfalls N- und/oder O-Atome enthaltenden Kohlenwasserstoffrest mit 1 bis 18 Kohlenstoffatomen bedeutet.

8. Verfahren nach einem der Ansprüche 1 bis 7, **dadurch gekennzeichnet, dass** als Siloxane (1) solche der allgemeinen Formel

$$(R^1O)R_2SiO(SiR_2O)_n(SiRAO)_mSiR_2(OR^1) \qquad (VI)$$

wobei A, R und $R^1$ die in Anspruch 1 dafür angegebene Bedeutung haben,
m eine ganze Zahl von 1 bis 30 ist und
n 0 oder eine ganze Zahl von 1 bis 1000 ist,
eingesetzt werden,
mit der Maßgabe, dass mindestens ein Rest $R^1$ in der Bedeutung von $R^1$ gleich Wasserstoffatom je Molekül enthalten ist.

9. Verfahren nach einem der Ansprüche 1 bis 8, **dadurch gekennzeichnet, dass** als Siloxane (2) solche der allgemeinen Formel

$$(R^1O)R_2SiO(SiR_2O)_pSiR_2(OR^1) \qquad (VII)$$

wobei R und $R^1$ die im Anspruch 1 dafür angegebene Bedeutung haben und
p eine ganze Zahl von 1 bis 1000 ist,
eingesetzt werden.

10. Verfahren nach einem der Ansprüche 1 bis 9, **dadurch gekennzeichnet, dass** die Herstellung von Emulsionen von hochviskosen Organopolysiloxanen in Gegenwart von organischen Harzen und/oder Polysiloxanharzen erfolgt.

11. Emulsionen von hochviskosen Organopolysiloxanen enthaltend hochviskose Organopoysiloxane aus Einheiten der

allgemeinen Formel

$$A_aB_bR_c(OR^1)_dSiO_{\frac{4-(a+b+c+d)}{2}} \qquad (IV)$$

wobei A, B, R, $R^1$, a, c und d die in Anspruch 1 dafür angegebene Bedeutung haben,
b 0 oder 1 ist,
mit der Maßgabe, dass die Summe a+b+c+d $\leq$ 3 ist und a und b in derselben Einheit nicht gleichzeitig 1 sind, dass durchschnittlich je Molekül mindestens ein Rest B enthalten ist und dass die hochviskosen Organopolysiloxane eine Viskosität von 110.000 bis 50.000.000 mPa·s bei 25°C aufweisen,
Dispersionsmedium (4) und
gegebenenfalls Emulgator (5).

**12.** Emulsionen von hochviskosen Organopolysiloxanen nach Anspruch 11, **dadurch gekennzeichnet, dass** als Dispersionsmedium (4) Wasser eingesetzt wird.

**13.** Emulsionen von hochviskosen Organopolysiloxanen nach Anspruch 11 oder 12, **dadurch gekennzeichnet, dass** der Rest A ein Rest der Formel

$$R^5_2N\text{-}(CHR^2)_n\text{-} \qquad (V),$$

ist, wobei $R^2$ die in Anspruch 1 dafür angegebene Bedeutung hat,
$R^5$ gleich oder verschieden ist und ein Wasserstoffatom oder einen Alkyl-, Cycloalkyl- oder Aminoalkylrest bedeutet und
n eine ganze Zahl von 2 bis 10 ist.

**14.** Emulsionen von hochviskosen Organopolysiloxanen nach einem der Ansprüche 11 bis 13, **dadurch gekennzeichnet, dass** der Rest B ein Rest der Formel $-CH_2NHR^4$ oder $-CH_2NR^4_2$ ist, wobei $R^4$ einen einwertigen, gegebenenfalls N- und/oder O-Atome enthaltenden Kohlenwasserstoffrest mit 1 bis 18 Kohlenstoffatomen bedeutet.

**Claims**

**1.** Process for preparing emulsions of highly viscous organopolysiloxanes, **characterized in that** siloxanes selected from the group of siloxanes (1) composed of units of the general formula

$$A_aR_c(OR^1)_dSiO_{\frac{4-(a+c+d)}{2}} \qquad (I)$$

where

A is a monovalent, Si-C-bonded radical having basic nitrogen,
R is a monovalent, optionally substituted hydrocarbon radical having from 1 to 18 carbon atoms per radical,
$R^1$ is a hydrogen atom or an alkyl radical having from 1 to 8 carbon atoms,
a is 0 or 1,
c is 0, 1, 2 or 3 and
d is 0 or 1,

with the proviso that the sum of a+c+d is $\leq$ 3 and, on average, at least one A radical and at least one $R^1$ radical in the definition of $R^1$ as a hydrogen atom are present per molecule,
siloxanes (2) composed of units of the general formula

$$R_c(OR^1)_dSiO_{\frac{4-(c+d)}{2}} \qquad (II)$$

where R, $R^1$, c and d are each as defined above, with the proviso that the sum of c+d is $\leq 3$ and at least one $R^1$ radical in the definition of $R^1$ as a hydrogen atom is present per molecule, and the mixtures of siloxanes (1) and (2), are reacted with silanes (3) of the general formula

$$BR_eSi(OR^3)_{3-e} \qquad (III)$$

where

B is a monovalent radical of the formula -CR$^2$$_2$-Y,
$R^2$ is a hydrogen atom or an alkyl radical having from 1 to 4 carbon atoms,
Y is a monofunctional radical from the group of the halogens, the monosubstituted O and S atoms and the substituted N and P atoms,
$R^3$ is an alkyl radical having from 1 to 8 carbon atoms per radical and
e is 0, 1 or 2,

in the presence of dispersion medium (4) and
optionally emulsifiers (5)
with the proviso that when no siloxane (1) is also used, Y in silane (3) is a monofunctional radical from the group of substituted nitrogen atoms.

2. Process according to Claim 1, **characterized in that** the dispersion medium (4) used is water.

3. Process according to Claim 1 or 2, **characterized in that** the highly viscous organopolysiloxanes have a viscosity of from 110 000 to 50 000 000 mPa·s at 25°C.

4. Process according to Claim 1, 2 or 3, **characterized in that** the A radical is a radical of the formula

$$R^5{}_2N\text{-}(CHR_2)_n\text{-} \qquad (V)$$

where $R^2$ is as defined in Claim 1 and is preferably a hydrogen atom,
$R^5$ is the same or different and is a hydrogen atom or an alkyl, cycloalkyl or aminoalkyl radical and
n is an integer from 2 to 10.

5. Process according to one of Claims 1 to 4, **characterized in that** the A radical is a 3-(2-aminoethyl)aminopropyl radical.

6. Process according to one of Claims 1 to 4, **characterized in that** the A radical is a 3-aminopropyl radical.

7. Process according to one of Claims 1 to 6, **characterized in that** the B radical is a radical of the formula -CH$_2$NHR$^4$ or -CH$_2$NR$^4$$_2$, where $R^4$ is a monovalent hydrocarbon radical optionally containing nitrogen and/or oxygen atoms and having from 1 to 18 carbon atoms.

8. Process according to one of Claims 1 to 7, **characterized in that** the siloxanes (1) used are those of the general formula

$$(R^1O)R_2SiO(SiR_2O)_n(SiRAO)_mSiR_2(OR^1) \qquad (VI)$$

where A, R and $R^1$ are each as defined in Claim 1,
m is an integer from 1 to 30 and
n is 0 or an integer from 1 to 1000,
with the proviso that at least one $R^1$ radical in the definition of $R^1$ as a hydrogen atom is present per molecule.

9. Process according to one of Claims 1 to 6, **characterized in that** the siloxanes (2) used are those of the general formula

$$(R^1O)R_2SiO(SiR_2O)_pSiR_2(OR^1) \qquad (VII)$$

where R and $R^1$ are each as defined in Claim 1 and
p is an integer from 1 to 1000.

10. Process according to one of Claims 1 to 9, **characterized in that** emulsions of highly viscous organopolysiloxanes are prepared in the presence of organic resins and/or polysiloxane resins.

11. Emulsions of highly viscous organopolysiloxanes comprising highly viscous organopolysiloxanes composed of units of the general formula

$$A_aB_bR_c(OR^1)_dSiO_{\frac{4-(a+b+c+d)}{2}} \qquad (IV)$$

where A, B, R, $R^1$, a, c and d are each as defined in Claim 1,
b is 0 or 1,
with the proviso that the sum of a+b+c+d is $\leq$ 3 and a and b in the same unit are not simultaneously 1, that, on average, at least one B radical is present per molecule and that the highly viscous organopolysiloxanes have a viscosity of 110 000 to 50 000 000 mPa·s at 25°C, dispersion medium (4) and
optionally emulsifier (5).

12. Emulsions of highly viscous organopolysiloxanes according to Claim 11, **characterized in that** the dispersion medium (4) used is water.

13. Emulsions of highly viscous organopolysiloxanes according to Claim 11 or 12, **characterized in that** the A radical is a radical of the formula

$$R^5_2N-(CHR^2)_n- \qquad (V)$$

where $R^2$ is as defined in Claim 1,
$R^5$ is the same or different and is a hydrogen atom or an alkyl, cycloalkyl or aminoalkyl radical and
n is an integer from 2 to 10.

14. Emulsions of highly viscous organopolysiloxanes according to one of Claims 11 to 13, **characterized in that** the B radical is a radical of the formula $-CH_2NHR^4$ or $-CH_2NR^4_2$, where $R^4$ is a monovalent hydrocarbon radical optionally containing nitrogen and/or oxygen atoms and having from 1 to 18 carbon atoms.

**Revendications**

1. Procédé pour la préparation d'émulsions d'organopolysiloxanes hautement visqueux, **caractérisé en ce qu'**on transforme des siloxanes choisis dans le groupe formé par
des siloxanes (1) d'unités de formule générale

$$A_aR_c(OR^1)_d SiO_{\frac{4-(a+c+d)}{2}} \qquad (I)$$

où

A signifie un radical monovalent lié par Si-C avec un azote basique,
R signifie un radical hydrocarboné monovalent, le cas échéant substitué comprenant 1 à 18 atomes de carbone par radical,

$R^1$ signifie un atome d'hydrogène ou un radical alkyle comprenant 1 à 8 atomes de carbone,
a vaut 0 ou 1,
c vaut 0, 1, 2 ou 3 et
d vaut 0 ou 1,

à condition que la somme a + c + d ≤ 3 et qu'il existe en moyenne au moins un radical A et au moins un radical $R^1$ dans la signification de $R^1$ représentant un atome d'hydrogène par molécule,
des siloxanes (2) d'unités de formule générale

$$R_c(OR^1)_d SiO_{\frac{4-(c+d)}{2}} \qquad (II)$$

où

R, $R^1$, c et d ont la signification indiquée ci-dessus, à condition que la somme c + d ≤ 3 et qu'il existe au moins un radical $R^1$ dans la signification de $R^1$ représentant un atome d'hydrogène par molécule,

et les mélanges de siloxanes (1) et (2), avec des silanes (3) de formule générale

$$BR_eSi(OR^3)_{3-e} \qquad (III)$$

B signifie un radical monovalent de formule $-CR^2_2-Y$,
$R^2$ signifie un atome d'hydrogène ou un radical alkyle comprenant 1 à 4 atomes de carbone,
Y signifie un radical monofonctionnel du groupe des halogènes, des atomes O et S monosubstitués et des atomes N et P substitués
$R^3$ signifie un radical alkyle comprenant 1 à 8 atomes de carbone par radical

et

e vaut 0, 1 ou 2,

en présence d'un milieu de dispersion (4) et le cas échéant des émulsifiants (5),
à condition que lorsqu'on n'utilise pas conjointement de siloxane (1), Y dans le silane (3) représente un radical monofonctionnel du groupe des atomes N substitués.

2. Procédé selon la revendication 1, **caractérisé en ce qu'**on utilise de l'eau comme milieu de dispersion (4).

3. Procédé selon la revendication 1 ou 2, **caractérisé en ce que** les organopolysiloxanes hautement visqueux présentent une viscosité de 110 000 à 50 000 000 mPa.s à 25°C.

4. Procédé selon la revendication 1, 2 ou 3, **caractérisé en ce que** le radical A signifie un radical de formule

$$R^5_2N\text{-}(CHR^2)_n\text{-} \qquad (V),$$

dans laquelle

$R^2$ a la signification indiquée pour ce radical dans la revendication 1 et représente de préférence un atome d'hydrogène,
$R^5$ est identique ou différent et représente un atome d'hydrogène ou un radical alkyle, cycloalkyle ou aminoalkyle et n vaut un nombre entier de 2 à 10.

5. Procédé selon l'une quelconque des revendications 1 à 4, **caractérisé en ce que** le radical A représente un radical 3-(2-aminoéthyl)aminopropyle.

6. Procédé selon l'une quelconque des revendications 1 à 4, **caractérisé en ce que** le radical A représente un radical 3-aminopropyle.

**7.** Procédé selon l'une quelconque des revendications 1 à 6, **caractérisé en ce que** le radical B représente un radical de formule -CH$_2$NHR$^4$ ou -CH$_2$NR$^4{}_2$, où R$^4$ représente un radical hydrocarboné monovalent, contenant le cas échéant des atomes N et/ou O, comprenant 1 à 18 atomes de carbone.

**8.** Procédé selon l'une quelconque des revendications 1 à 7, **caractérisé en ce qu'**on utilise comme siloxanes (1) ceux de formule générale

$$(R^1O)R_2SiO(SiR_2O)_n(SiRAO)_mSiR_2(OR^1) \qquad (VI)$$

où

A, R et R$^1$ ont la signification mentionnée pour ces radicaux dans la revendication 1,
m vaut un nombre entier de 1 à 30 et
n vaut 0 ou un nombre entier de 1 à 1000,

à condition qu'il existe au moins un radical R$^1$ dans la signification de R$^1$ représentant un atome d'hydrogène par molécule.

**9.** Procédé selon l'une quelconque des revendications 1 à 8, **caractérisé en ce qu'**on utilise comme siloxanes (2) ceux de formule générale

$$(R^1O)R_2SiO(SiR_2O)_pSiR_2(OR^1) \qquad (VII)$$

où

R et R$^1$ ont la signification mentionnée pour ces radicaux dans la revendication 1 et
p vaut un nombre entier de 1 à 1000.

**10.** Procédé selon l'une quelconque des revendications 1 à 9, **caractérisé en ce que** la préparation d'émulsions d'organopolysiloxanes hautement visqueux est réalisée en présence de résines organiques et/ou de résines de polysiloxane.

**11.** Emulsions d'organopolysiloxanes hautement visqueux contenant des organopolysiloxanes hautement visqueux constitués d'unités de formule générale

$$A_aB_bR_c(OR^1)SiO_{\frac{4-(a+b+c+d)}{2}} \qquad (IV)$$

où

A, B, R, R$^1$, a, c et d ont la signification mentionnée pour ces radicaux dans la revendication 1,
b vaut 0 ou 1,

à condition que la somme a + b + c + d ≤ 3 et que a et b dans la même unité ne valent pas simultanément 1, qu'il existe en moyenne, par molécule, au moins un radical B et que les organopolysiloxanes hautement visqueux présentent une viscosité de 110 000 à 50 000 000 mPa.s à 25°C, un milieu de dispersion (4) et le cas échéant un émulsifiant (5).

**12.** Emulsions d'organopolysiloxanes hautement visqueux selon la revendication 11, **caractérisées en ce qu'**on utilise de l'eau comme milieu de dispersion (4).

**13.** Emulsions d'organopolysiloxanes hautement visqueux selon la revendication 11 ou 12, **caractérisées en ce que** le radical A signifie un radical de formule

$$R^5{}_2N\text{-}(CHR^2)_n\text{-} \qquad (V),$$

dans laquelle

R$^2$ a la signification mentionnée pour ce groupe dans la revendication 1,
R$^5$ est identique ou différent et représente un atome d'hydrogène ou un radical alkyle, cycloalkyle ou aminoalkyle et n représente un nombre entier de 2 à 10.

14. Emulsions d'organopolysiloxanes hautement visqueux selon l'une quelconque des revendications 11 à 13, **caractérisées en ce que** le radical B représente un radical de formule -CH$_2$NHR$^4$ ou -CH$_2$NR$^4_2$, où R$^4$ représente un radical hydrocarboné monovalent, contenant le cas échéant des atomes N et/ou O, comprenant 1 à 18 atomes de carbone.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2500020 A
- US 5241034 A
- US 6252100 B
- EP 874017 A
- US 6451909 B